# EUROPÄISCHE PATENTSCHRIFT

(11) **EP 3 492 432 B1**
(45) Veröffentlichungstag und Bekanntmachung des Hinweises auf die Patenterteilung: **07.07.2021**
(21) Anmeldenummer: 17204628.6
(22) Anmeldetag: 30.11.2017
(51) Int. Cl.: C02F 1/32, A61L 2/10, B01J 19/12

(54) **UV- DESINFEKTIONSVORRICHTUNG FÜR FLÜSSIGKEITEN**
UV DISINFECTING DEVICE FOR LIQUIDS
DISPOSITIF DE DÉSINFECTION PAR UV POUR LIQUIDES

(43) Veröffentlichungstag der Anmeldung: 05.06.2019
(73) Patentinhaber: Airwatec SA., 4700 Eupen (BE)
(72) Erfinder: PIRARD, Raphael, 4837 Baelen (BE)
(74) Vertreter: dompatent von Kreisler Selting Werner - Partnerschaft von Patent- und Rechtsanwälten mbB

(56) Entgegenhaltungen:
- EP-A1- 0 655 417
- EP-A2- 1 862 185
- EP-B1- 1 436 025
- JP-A- 2010 264 433
- US-A- 6 071 473

## Beschreibung

### Gebiet der Erfindung

Die Erfindung betrifft eine wenig aufwendig und kompakt aufgebaute Vorrichtung zur zuverlässigen Desinfektion von Flüssigkeiten bei geringem Wartungsaufwand und ein Verfahren zum Betreiben einer solchen Vorrichtung.

### Hintergrund der Erfindung

Die Wasseraufbereitung ist ein wesentlicher Verfahrensschritt bei der Produktion von Trinkwasser für den menschlichen Gebrauch. In manchen Ländern oder Anwendungen ist der Zusatz von Chlor zur Desinfektion des Trinkwassers nicht gewünscht, nicht praktikabel oder nicht zulässig, weshalb je nach Einsatzgebiet Alternativen, wie Filtrierung, Ozonierung und UV- Strahlung zur Desinfektion verwendet werden. Durch seine (im Vergleich zu Licht im sichtbaren Spektrum) höhere Energie vermag UV- Strahlung Bakterien, Viren sowie vielerlei Sporen abzutöten und ist damit auch anstelle von Chlor oder Sauerstoff zur Desinfektion geeignet. Solche UV- Anlagen werden bereits zur Aufbereitung von Wasser für Aquarien, Schwimmbecken, Planschbecken oder Trinkwasser eingesetzt.

DE 102 00 812 A1 offenbart eine Vorrichtung zur Desinfektion von Wasser durch ultraviolette Strahlung, bei der eine längliche sich in Flussrichtung des Wassers erstreckenden UV- Lampe das Wasser desinfiziert und eine Vielzahl an Ultraschallgebern an verschiedenen Positionen entlang der Flussrichtung mit einer Ausrichtung auf die Seitenwände der länglichen UV-Lampe angeordnet sind, um Ultraschall in die Flüssigkeit einzubringen, um mittels Ultraschallkavitation und der daraus resultierenden Reinigung der UV- Lampe die Effektivität der UV-Bestrahlung zur Desinfektion des Wasser zu erhöhen. Die offenbarte Vorrichtung ist allerdings sehr komplex und damit aufwendig aufgebaut, umfasst eine Vielzahl an Komponenten und besitzt einen großen Zylinderdurchmesser, wodurch diese Anlage nicht an Stellen mit kleinem Bauraum angebracht werden kann, wo stattdessen kompakte Vorrichtungen benötigt werden.

EP 0 655 417 A1 und US 6 071 473 A offenbaren eine Vorrichtung mit einem zylinderförmigen Behälter, in dessen Innern eine Ultraschallquelle zur Aussendung einer Ultraschallwelle entlang der UV-Lampenumhüllung angeordnet ist.

Es wäre wünschenswert, eine Vorrichtung zur zuverlässigen effektiven Desinfektion bei geringem Wartungsaufwand zur Verfügung zu haben, die wenig aufwendig, ohne mechanische Reinigungselemente wie Bürsten oder Abstreifer kompakt aufgebaut ist.

### Zusammenfassung der Erfindung

Es ist daher eine Aufgabe der Erfindung, eine Vorrichtung zur zuverlässigen effektiven Desinfektion bei geringem Wartungsaufwand zur Verfügung zu stellen, die wenig aufwendig, ohne mechanische Reinigungselemente wie Bürsten oder Abstreifer, kompakt aufgebaut ist.

Diese Aufgabe wird gelöst durch eine Vorrichtung zur Desinfektion von Flüssigkeiten mittels UV- Strahlung gemäß Anspruch 1.

Flüssigkeiten im Sinne der vorliegenden Erfindung sind alle Arten von Flüssigkeiten, deren Viskosität gering genug ist, dass sie durch die erfindungsgemäße Vorrichtung mit Einlass- und Auslassöffnung strömen können und bei denen die Möglichkeit einer Verunreinigung besteht, die durch UV-Strahlung beseitig werden kann. Solche Flüssigkeiten sind beispielsweise Brauchwasser, Trinkwasser oder Abwasser.

Der Begriff UV- Lampe bezeichnet alle Arten von Lampen, die zumindest teilweise im ultravioletten Spektralbereich emittieren. Die UV- Lampe muss dabei nicht ausschließlich im UV-Bereich des elektromagnetischen Spektrums emittieren, sondern kann auch kurz- und/oder langwelligere Emissionsbereiche mit umfassen. Beispielsweise kann die UV-Lampe sogenannte UVC-Strahlung aussenden. Hierbei hat sich eine UV-Bestrahlung mit 253 - 267nm Wellenlänge als sehr effektiv zur Entkeimung von Flüssigkeiten herausgestellt. Strahlungsquellen, die beispielsweise UVC-Strahlung unter anderem mit einer Wellenlänge von 253,7nm aussenden, sind zur Entfernung von Legionellen, Mikroben, Bakterien, Viren und Protozoen sehr geeignet. Eine Gefahr einer Überdosierung besteht bei UV-Desinfektion nicht. Eine UV-Desinfektion nimmt Rücksicht auf die Umwelt, da keine Zusatzchemikalien zur Desinfektion eingebracht werden müssen und stellt somit ein vorteilhaftes Verfahren zur Abtötung von Mikrolebewesen in Flüssigkeiten dar.

Die Einlass- und Auslassöffnungen bezeichnen die Flüssigkeitskanäle in den zylinderförmigen Behälter hinein und wieder hinaus. Sie können dabei so ausgestaltet sein, dass sie an gängige Leitungsquerschnitte mit üblichen Maßnahmen angeschlossen werden können. Die ersten und zweiten Enden des Behälters schließen den Behälter mit Ausnahme der Einlass- und Auslassöffnungen (am ersten Ende) gegenüber der Außenumgebung flüssigkeitsdicht ab, sodass die Flüssigkeit innerhalb des Behälters sicher ohne Lenkverluste desinfiziert werden kann. Damit die UV-Lampe geschützt ist und gegebenenfalls ohne Öffnung des flüssigkeitstragenden Teils des Behälters ausgetauscht werden kann, ist die UV-Lampe durch eine flüssigkeitsdichte Lampenumhüllung aus einem UV-transparenten Material umhüllt. Der Begriff "UV-transparentes Material" bezeichnet jedes Material, das zumindest für einen Teil der UV-Strahlung der UV-Lampe transparent ist, zumindest aber durchlässig für den Wellenlängenbereich, der für die UV-Desinfektion der Flüssigkeiten verwendet werden soll. Dabei kann das UV-transparente Material auch in anderen Bereichen des Spektrums transparent sein, beispielsweise in sichtbaren Bereich. Ein solches UV-transparentes Material ist beispielsweise Quarzglas. Dabei kann die Innenform der Lampenumhüllung auf die Form der UV-Lampe angepasst sein, damit der Behälter ein möglichst großes Prozessvolumen und damit einem möglichst großen Flüssigkeitsdurchsatz bereitstellen kann. Die Lampenumhüllung kann beispielsweise eine Zylinderform besitzen, wobei der Abschluss der Zylinderform beispielsweise durch eine ebene Fläche oder durch eine Kuppelform gebildet wird. Die UV-Lampe ist beispielsweise eine handelsübliche zylinderförmige UV-Lichtquelle mit einer Leistung von 20 - 100W. Die der Flüssigkeit zugewandte Oberfläche der Lampenumhüllung kann in einer Ausführungsform zusätzlich mit einer Tetauri -Beschichtung versehen sein, die das Ablagern von unerwünschten Teilchen oder Stoffen auf dieser Oberfläche verhindert oder zumindest erschwert. Eine solche Beschichtung muss dabei aber zumindest UV-transparent ausgeführt sein. Diese Beschichtungen werden beispielsweise zur Teichwasserbehandlung verwendet.

Form und Länge des zylinderförmigen Flüssigkeitsleitblechs definieren den Zulaufspalt (Länge, Breite) sowie den Rücklaufkanal (Länge, Breite) für die Flüssigkeit. Dadurch wird die Strömungsgeschwindigkeit und Strömungscharakteristik der Flüssigkeit entlang der Lampenumhüllung zur Auslassöffnung eingestellt. Damit die Desinfektion ideal ablaufen kann, werden hiermit die Parameter des Flüssigkeitsstroms (Verweildauer im Bereich der UV-Strahlung und Durchstrahlungstiefe für die UV-Strahlung) eingestellt. Das Material des Flüssigkeitsleitblechs ist aus Edelstahl AISI 316L gefertigt. Der Behälter kann je nach Anwendung beispielsweise auf seiner der Flüssigkeit zugewandten Seite ebenfalls aus Edelstahl gefertigt sein. Die anderen Bereiche des Behälters können aus jedem geeigneten Material, beispielsweise Plastik, gefertigt sein. In einer Ausführungsform weist das Flüssigkeitsleitblech auf der Außenseite Abstandshalter zur Innenseite des Behälters auf, damit der Zulaufspalt auf bei wechselnder Durchflussgeschwindigkeit immer eine definierte Breite besitzt.

Um eine zuverlässige Desinfektion zusätzlich bei geringem Wartungsaufwand zur Verfügung zu stellen, muss die Lampenumhüllung gereinigt werden, da die Schwebstoffe, Mikrolebewesen und anderen Verunreinigungen in der Flüssigkeit sich auf der Lampenumhüllung absetzen und damit deren Transparenz reduzieren, was zu einer reduzierten Desinfektionswirkung führt, da durch die geringe Transparenz weniger UV-Strahlung (geringere Intensität) in die Flüssigkeit eindringt. Eine saubere Lampenumhüllung garantiert eine effektive Desinfektion der an ihr entlang geleiteten Flüssigkeit. Zur Reinigung der Lampenumhüllung dient der Ultraschallkopf, der hier am zweiten Ende des Behälters angeordnet ist. Durch seine spezielle Anordnung kann die Lampenumhüllung durch einen einzigen Ultraschallkopf so gereinigt werden, dass die Vorrichtung mit wenig Aufwand kompakt gebaut werden kann und dennoch eine zuverlässige Desinfektion mit geringem Wartungsaufwand ermöglicht. Auch wenn in der erfindungsgemäßen Vorrichtung nur ein Ultraschallkopf eingesetzt wird, ist es nicht mehr nötig, den Behälter zur Reinigung der Lampenumhüllung zu demontieren und die Lampenumhüllung manuell zu reinigen. Hierzu ist die ultraschall-emittierenden Fläche in Richtung der Zylinderachse unterhalb der Lampenumhüllung angeordnet, sodass sich die von er emittierenden Fläche ausgesandte Ultraschallwelle entlang der der Flüssigkeit zugewandten Oberfläche der Lampenumhüllung ausbreitet. In einer bevorzugten Ausführungsform ist die emittierende Fläche in einem rechten Winkel (90 Grad-Winkel) zur Zylinderachse des Behälters angeordnet.

Die vorliegende Erfindung stellt somit eine Vorrichtung zur zuverlässigen effektiven Desinfektion bei geringem Wartungsaufwand zur Verfügung, die wenig aufwendig und kompakt aufgebaut ist.

Diese Vorrichtung kann mit geringem Aufwand dauerhaft zuverlässig beispielsweise für Regenwasser (die UV-Behandlung erweitert den Anwendungsbereich für Regenwasser und bietet eine gesteigerte Sicherheit bei der Anwendung), für Brunnenwasser (Vermeidung eventueller Verseuchungen durch Krankheitserreger), für Leitungswasser (Gewährleistung einer entsprechenden Qualität des Wassers), für Quellwasser oder Oberflächenwasser (Gewährleistung einer konstanten und aus bakteriologischer Sicht einwandfreien Wasserqualität) oder für Speicherwasser in Behältern, beispielsweise Wohnwagen oder Boote (Verwendung des gespeicherten Wassers zu Sanitärzwecken), verwendet werden. Die möglichen Einsatzbereiche liegen bei der allgemeine Ernährung, in Bad und Dusche, beim Kochen, für großvolumige Kühlschränke, für Kaltwasserfontänen, für Aquarien, beim Waschen von Speisen oder bei der Zucht von Tieren wie Hühnern, Kaninchen, Enten durch Trinkwasser ohne Mikroorganismen, vor allem ohne Krankheitserreger.

In einer Ausführungsform besitzt die Lampenumhüllung einen kuppelförmigen Abschluss in Richtung des Ultraschallkopfes. Der Begriff kuppelförmig bezeichnet alle dreidimensionalen domartigen Erhebungen. Der kuppelförmige Abschluss besitzt als Basis die Querschnittsform der Lampenumhüllung, beispielsweise eine Kreisform als Basis bei einer zylindrischen Lampenumhüllung. Dieser kuppelförmige Abschluss ist sowohl für die Strömungsverhältnisse innerhalb des Behälters als auch für die Ausbreitung der Ultraschallwellen zur Reinigung der Lampenumhüllung vorteilhaft.

In einer weiteren Ausführungsform ist die emittierende Fläche des Ultraschallkopfes so angeordnet und besitzt eine Größe und Form, dass eine Projektion der emittierenden Fläche entlang der Zylinderachse eine Querschnittsfläche der Lampenumhüllung senkrecht zur Zylinderachse überdeckt. Eine so gestaltete emittierende Fläche relativ zur Lampenumhüllung steigert die Intensität und Ausbreitungsqualität der Ultraschallwelle entlang der Oberfläche der Lampenumhüllung.

In einer weiteren Ausführungsform ist der Ultraschallkopf ein Piezo-Ultraschallgeber. Der Piezo-Ultraschallgeber erzeugt bei einem sehr geringen Energieverbrauch verglichen mit Elektromagnetischen und Turbulenzen - Erzeugenden Systemen die stärkste Kavitation. Der Begriff "Kavitation" bezeichnet die Bildung und Auflösung von dampfgefüllten Hohlräumen in Flüssigkeiten, mittels der Oberflächen gereinigt werden können.

In einer weiteren Ausführungsform ist eine Entfernung zwischen der emittierenden Fläche des Ultraschallkopfes und dem ersten Ende des Behälters darauf angepasst, dass die vom Ultraschallkopf ausgesendete Ultraschallwelle eine stehende Welle innerhalb des Behälters bildet. Die stehende Welle verursacht eine weiter erhöhte Reinigungswirkung auf die Oberfläche der Lampenumhüllung. In einer Ausführungsform ist die stehende Welle eine wandernde stehende Welle, sodass auf allen Punkte der Oberfläche der Lampenumhüllung je nach Position der stehenden Welle von Zeit zu Zeit Knotenpunkte der stehenden Welle liegen.

In einer weiteren Ausführungsform erstreckt sich das Flüssigkeitsleitblech entlang der Zylinderachse soweit, sodass die Lampenumhüllung und zumindest die emittierende Fläche des Ultraschallkopfes innerhalb des Flüssigkeitsleitblechs angeordnet sind. Dadurch wird sichergestellt, dass die Flüssigkeit entlang der gesamten Lampe und damit durch die gesamte ausgesendete UV-Strahlung hindurchströmt und die Strömungsverhältnisse im Ausbreitungsbereich der Ultraschallwellen definiert eingestellt sind.

In einer weiteren Ausführungsform weist das Flüssigkeitsleitblech zur Dosierung des Flüssigkeitsflusses durch die Vorrichtung mehrere Öffnungen auf, um die Flüssigkeit von der Blechaußenseite zur Blechinnenseite zu leiten. Durch die Öffnungen können die Strömungseigenschaften sehr genau an die gewünschten Bedingungen für die jeweilige Anwendung der Vorrichtung angepasst werden.

In einer weiteren Ausführungsform weist der Behälter an seiner Innenseite am zweiten Ende einen Rezess auf, in dem der Ultraschallkopf angeordnet ist und auf dessen Randfläche das Flüssigkeitsleitblech mit seiner dem zweiten Ende zugewandten Kante aufliegt. Diese Anordnung ist sehr robust im Betrieb der Vorrichtung, insbesondere bei hoher Ultraschallintensität, sodass die Strömungsverhältnisse im Rücklaufkanal besonders konstant gehalten werden können, was durch die besonders günstig und stabil eingestellte Strömung der Flüssigkeit entlang der Lampenumhüllung einen sicheren Abtransport der mittels Ultraschall von der Lampenumhüllung abgelösten Stoffe und somit sichere langfristige Reinigung der Lampenumhüllung garantiert. In einer bevorzugten Ausführungsform weist dazu die Kante mehrere Stege zur Auflage auf die Randfläche und dazwischen angeordnete Lücken zur Durchströmung von Flüssigkeit auf.

In einer weiteren Ausführungsform ist der Behälter so ausgestaltet, dass die UV-Lampe am ersten Ende des Behälters separat von der Lampenumhüllung mittels einer ersten Halterung mit dem Behälter reversibel verbunden werden kann, wobei das erste Ende so ausgestaltet ist, dass die Flüssigkeit im Rücklaufkanal unabhängig vom Vorhandensein der UV-Lampe seitlich an der Lampenumhüllung vorbei zur Auslassöffnung gelangen kann. Dadurch kann bei einem Defekt der UV-Lampe diese ohne Demontage des Behälters und ohne Öffnung der Flüssigkeitsbereiches des Behälters ausgetauscht werden. Vorzugsweise wird die UV-Lampe in das erste Ende des Behälters geschraubt oder mittels eines Bajonettverschlusses eingesetzt. Ein Bajonettverschluss ermöglicht beispielsweise mittels einer geringen Drehung (beispielsweise um lediglich 5°) einen Austausch der UV-Lampe innerhalb weniger Sekunden.

In einer weiteren Ausführungsform wird die Lampenumhüllung mittels einer zweiten Halterung reversibel im ersten Ende des Behälters gehalten, wobei die zweite Halterung so ausgeführt ist, dass sie sicheren Halt trotz Ultraschallbelastung bietet, beispielsweise durch einen geeigneten Stützring oder eine Spiral-Stützfeder. Diese zweiten Halterungen stellen sicher, dass keine Leckage an der Lampenumhüllung durch langzeitige Ultraschallanwendung entstehen kann.

In einer weiteren Ausführungsform umfasst der Behälter einen zweiten Subbehälter, der sich zum zweiten Ende erstreckt, und einen ersten Subbehälter, der sich zum ersten Ende hin erstreckt, wobei der erste und der zweiten Subbehälter zur Bildung des Behälters geeignet miteinander verbunden sind, vorzugsweise werden die ersten und zweiten Subbehälter geeignet miteinander verschraubt. Diese reversibel verbundenen Subbehälter ermöglichen den einfachen Zugang zu allen Innenbereichen des Behälters, sofern dies nötig werden sollte.

In einer weitern Ausführungsform ist die Auslassöffnung zusätzlich mit einem Diffusor ausgerüstet, welcher einen konstanten Durchfluss, eine längere Verweildauer des Wassers, sowie eine ausgeglichene Wasserbehandlung beispielsweise im Umfeld von 360° im Behälter garantiert. Der Diffusor kann dabei als Lochblech angeordnet im 90 Grad-Winkel zur Strömungsrichtung des Wassers ausgestaltet sein.

Die Erfindung betrifft des Weiteren ein Verfahren zum Betreiben der erfindungsgemäßen Vorrichtung gemäß Anspruch 13.

In einer Ausführungsform des Verfahrens erfolgt das periodische Säubern im Betrieb mindestens ein Mal in 1 Stunde mit einer Ultraschalldauer pro Mal von jeweils mindestens 1 Sekunde erfolgt, vorzugsweise erfolgt das periodische Säubern bei ausgeschalteter UV-Lampe. Das Reinigungsintervall kann aber auch kürzer sein, beispielsweise ein Mal innerhalb einer Stunde. Die Dauer der Ultraschallreinigung kann dabei auch länger ausfallen, beispielsweise mindestens 3 Sekunden pro Mal. Die Steuerung des Ultraschallkopfes kann beispielsweise über einen programmierbaren Steuerchip vorgenommen werden, wo Reinigungsintervall und jeweilige Reinigungsdauer pro Intervall einprogrammiert werden.

In einer weiteren Ausführungsform des Verfahrens ist eine Entfernung zwischen der emittierenden Fläche des Ultraschallkopfes und dem ersten Ende des Behälters darauf angepasst, dass die vom Ultraschallkopf ausgesendete Ultraschallwelle eine stehende Welle innerhalb des Behälters bildet.

### Kurze Beschreibung der Abbildungen

Diese und andere Aspekte der Erfindung werden im Detail in den Abbildungen wie folgt gezeigt.
- Fig.1:: schematische Darstellung (a) einer Ausführungsform der erfindungsgemäßen Vorrichtung, und (b) eines Ausschnitts des Behälters der Vorrichtung;
- Fig.2:: schematische Darstellung einer Vergrößerung des zweiten Endes des in Fig.1 gezeigten Behälters;
- Fig.3:: schematische Darstellung einer Ausführungsform des erfindungsgemäßen Verfahrens zum Betreiben der erfindungsgemäßen Vorrichtung.

### Detaillierte Beschreibung der Ausführungsbeispiele

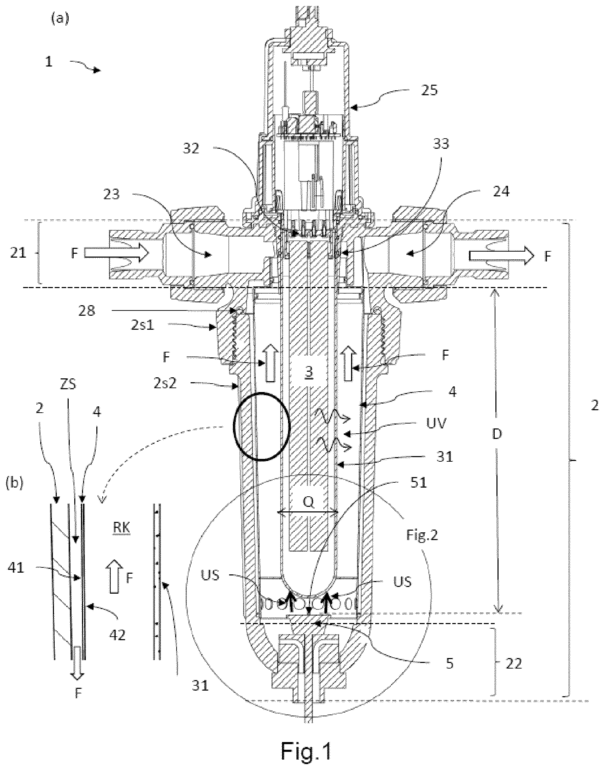

Fig.1 zeigt eine schematische Darstellung (a) einer Ausführungsform des erfindungsgemäßen Vorrichtung 1 zur Desinfektion von Flüssigkeiten F mittels UV-Strahlung UV, und (b) eines Ausschnitts des Behälters 2 der Vorrichtung 1.

Die Vorrichtung 1 umfasst einen zylinderförmigen hohlen Behälter 2 mit einer Zylinderachse Z mit Einlass- und Auslassöffnungen 23, 24 am gleichen ersten abschließenden Ende 21 des Behälters 2. Die Einlassöffnung 23 dient zum Einlassen der zu desinfizierenden Flüssigkeit F, während die Auslassöffnung zum Auslassen der desinfizierten Flüssigkeit F vorgesehen ist. Einlass- und Auslassöffnung 23, 24 können beispielsweise als Anschlussstücke mit für Rohrleitungen üblichen Querschnitten und Gewinden ausgeführt sein. Innerhalb des Behälters 2 ist zur Ausführung der Desinfektion der Flüssigkeit eine sich entlang der Zylinderachse Z des Behälters 2 in Richtung eines gegenüber dem ersten Ende 21 liegenden zweiten Ende 22 des Behälters 2 erstreckende UV-Lampe 3 mittig angeordnet. Die UV-Lampe 3 ist dabei durch eine flüssigkeitsdichte Lampenumhüllung 31 aus einem UV-transparenten Material umhüllt und damit von der Flüssigkeit F abgetrennt. Zum Einstellen und Leiten der Flüssigkeit mit definierter Strömung und Menge an der UV-Lampe 3 vorbei ist ein zylinderförmiges Flüssigkeitsleitblech 4 in radialer Richtung von der Zylinderachse Z zwischen Lampenumhüllung 31 und Behälter 2 angeordnet. Hierbei bildet die zum Behälter 2 gewandte Blechaußenseite 41 des zylinderförmigen Flüssigkeitsleitblechs 4 einen Zulaufspalt ZS von der Einlassöffnung 23 zur Lampenumhüllung 31 und die Blechinnenseite 42 des zylinderförmigen Flüssigkeitsleitblechs 4 einen Rücklaufkanal RK der Flüssigkeit F entlang der Lampenumhüllung 31 zur Auslassöffnung 22. Diese Details sind für ein besseres Verständnis als exemplarischer Ausschnitt in einer Vergrößerung in Fig 1b gezeigt. Das Flüssigkeitsleitblech 4 erstreckt sich in dieser Ausführungsform entlang der Zylinderachse Z soweit, dass die Lampenumhüllung 31 und die emittierende Fläche 51 des Unterschallkopfes 5 innerhalb des Flüssigkeitsleitblechs 4 angeordnet sind. Dabei ist der Ultraschallkopf 5 mit einer der Lampenumhüllung 31 zugewandten ultraschall-emittierenden Fläche 51 am zweiten Ende 22 zur Aussendung einer Ultraschallwelle US entlang der Lampenumhüllung 31 angeordnet, wobei die Zylinderachse Z hier in einem rechten Winkel mittig durch die emittierende Fläche 51 des Ultraschallkopfes 5 verläuft, sodass die emittierende Fläche 51 symmetrisch zur Lampenumhüllung 31 angeordnet ist. Der Ultraschallkopf 5 kann dabei als Piezo-Ultraschallgeber ausgeführt sein. In dieser Ausführungsform ist eine Entfernung D zwischen der emittierenden Fläche 51 des Ultraschallkopfes 5 und dem ersten Ende 21 des Behälters 2 zusätzlich darauf angepasst, dass die vom Ultraschallkopf 5 ausgesendete Ultraschallwelle US eine stehende Welle innerhalb des Behälters 2 bildet. Beispielsweise beträgt für eine 40kHz-Ultraschallwelle in Wasser mit einer Ausbreitungsgeschwindigkeit von 1500 m/s die Wellenlänge 37,5mm.

In dieser Ausführungsform ist der Behälter 2 außerdem so ausgestaltet, dass die UV-Lampe 3 am ersten Ende 21 des Behälters 2 separat von der Lampenumhüllung 31 mittels einer ersten Halterung 32 (hier nicht im Detail gezeigt) mit dem Behälter 2 reversibel verbunden, wobei das erste Ende 21 so ausgestaltet ist, dass die Flüssigkeit F im Rücklaufkanal RK unabhängig vom Vorhandensein der UV-Lampe 3 seitlich an der Lampenumhüllung 31 vorbei zur Auslassöffnung 24 gelangen kann. Dabei ist die Lampenumhüllung 31 mittels einer zweiten Halterung 33 (hier nicht im Detail gezeigt) reversibel im ersten Ende 21 des Behälters 2 gehalten wird, wobei die zweite Halterung 33 so ausgeführt ist, dass sie sicheren Halt trotz Ultraschallbelastung durch den Ultraschallkopf 5 bietet. Ferner hat der Behälter 2 in dieser Ausführungsform einen zweiten Subbehälter 2s2, der sich zum zweiten Ende 22 erstreckt, und einen ersten Subbehälter 2s1, der sich zum ersten Ende 21 hin erstreckt, wobei der erste und der zweiten Subbehälter 2s1, 2s2 durch eine Schraubverbindung zur Bildung des Behälters 2 miteinander verbunden, wobei die Dichtung 28 eine Flüssigkeitsabdichtung des Behälters 2 nach außen bereitstellt. Der Versorgungsaufsatz 25 auf dem Behälter 2 schließt die UV-Lampe 3 und gegebenenfalls weitere Kontrollsensoren / Steuereinheiten für die Vorrichtung 1 an eine Stromversorgung (hier nicht gezeigt) an.

Die erfindungsgemäße Vorrichtung 1 umfasst zudem eine hier nicht gezeigte Steuereinheit zur Steuerung der UV-Lampe und des Ultraschallkopfes. Der Fachmann ist in der Lage, die Komponenten für entsprechende Steuerung für die Vorrichtung auszuwählen und anzuordnen.

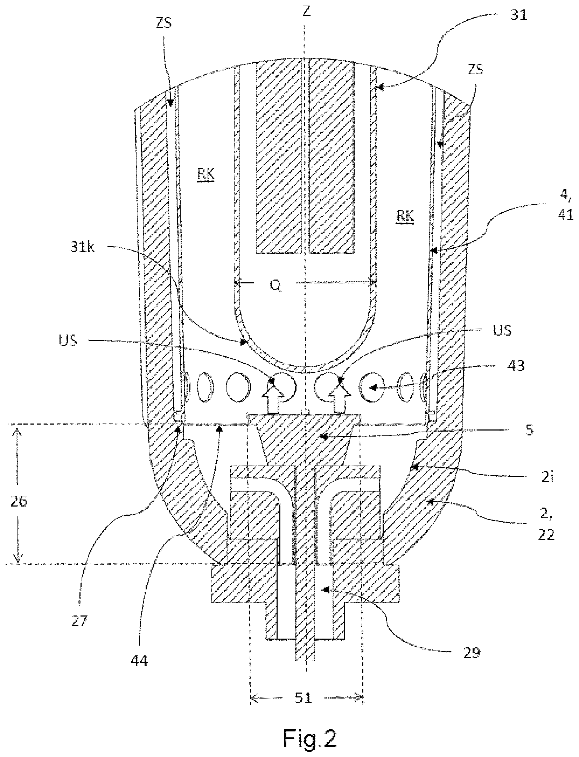

Fig.2 zeigt eine schematische Darstellung einer Vergrößerung des zweiten Endes des in Fig.1 gezeigten Behälters 2 mit einem kuppelförmigen Abschluss 31k der Lampenumhüllung 31 in Richtung des Ultraschallkopfes 5. Die emittierende Fläche 51 des Ultraschallkopfes 5 ist hier so angeordnet und besitzt eine Größe und Form, dass eine Projektion der emittierenden Fläche 51 entlang der Zylinderachse Z kleiner als die Querschnittsfläche Q der Lampenumhüllung 31 senkrecht zur Zylinderachse Z ist. In anderen Ausführungsformen kann die Projektion der emittierenden Fläche 51 aber auch die Querschnittsfläche Q der Lampenumhüllung überdecken. Das Flüssigkeitsleitblech 4 weist hier zur Dosierung des Flüssigkeitsflusses durch die Vorrichtung 1 mehrere Öffnungen 43 auf, um die Flüssigkeit F von der Blechaußenseite 41 zur Blechinnenseite 42 zu leiten. Der Behälter weist an seiner Innenseite 2i am zweiten Ende 22 einen Rezess 26 auf, in dem der Ultraschallkopf 5 angeordnet ist und auf dessen einer Randfläche 27 (obere Randfläche) das Flüssigkeitsleitblech 4 mit seiner dem zweiten Ende 22 zugewandten Kante 44 aufliegt. In einer weiteren Ausführungsform kann die Kante 44 zudem mehrere Stege zur Auflage auf der Randfläche 27 und dazwischen angeordnete Lücken zur Durchströmung von Flüssigkeit F aufweisen (hier nicht gezeigt). Am unteren Ende des zweiten Endes 22 ist hier zudem ein Auslasskanal 29 für Flüssigkeit aus dem Behälter angeordnet, der mit einem Ventil oder Stopfen verschlossen ist und bei Bedarf zum Ablassen von Restflüssigkeit geöffnet werden kann. Der mittlere schraffierte Bereich unterhalb des Ultraschallkopfes 5 dient der elektrischen Versorgung des Ultraschallkopfes.

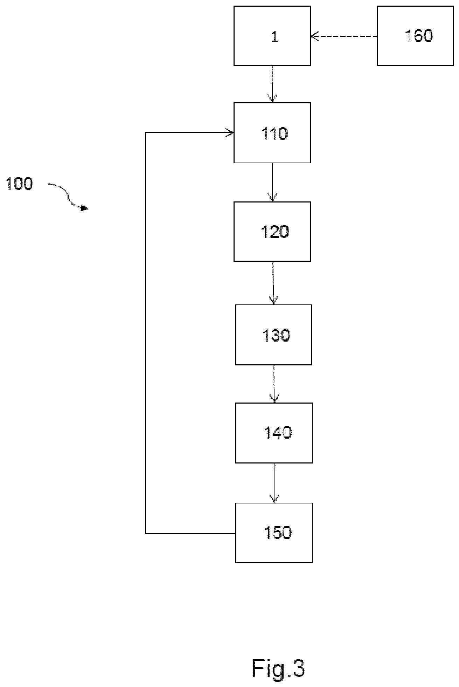

Fig.3 zeigt eine schematische Darstellung einer Ausführungsform des erfindungsgemäßen Verfahrens 100 zum Betreiben der erfindungsgemäßen Vorrichtung 1 umfassend die Schritte des Einlassens 110 einer zu desinfizierenden Flüssigkeit F durch eine Einlassöffnung 23 in einen zylinderförmigen hohlen Behälter 2 mit einer Zylinderachse Z, wobei die Einlassöffnung 23 am ersten abschließenden Ende 21 des Behälters 2 angeordnet ist; des Weiterleitens 120 der Flüssigkeit F mittels eines zylinderförmigen Flüssigkeitsleitblechs 4, das in radialer Richtung von der Zylinderachse Z zwischen einer flüssigkeitsdichten Lampenumhüllung 31 aus einem UV-transparenten Material, in der eine sich entlang der Zylinderachse Z in Richtung eines gegenüber dem ersten Ende 21 liegenden zweiten Ende 22 des Behälters 2 erstreckende UV-Lampe 3 angeordnet ist, und dem Behälter 2 angeordnet ist, wobei eine zum Behälter 2 gewandte Blechaußenseite 41 des Flüssigkeitsleitblechs einen Zulaufspalt ZS von der Einlassöffnung 23 zur Lampenumhüllung 31 und einen Blechinnenseite 42 des Flüssigkeitsleitblechs einen Rücklaufkanal RK der Flüssigkeit F entlang der Lampenumhüllung 31 zu einer Auslassöffnung 24 an dem ersten Ende 21 bildet; des Desinfizierens 130 der Flüssigkeit F mittels UV-Strahlung UV der UV-Lampe 3; des Auslassens 140 der desinfizierten Flüssigkeit F durch die Auslassöffnung 24; des periodischen Säuberns 150 der Lampenumhüllung 31 mittels eines Ultraschallkopfes 5 mit einer ultraschall-emittierenden Fläche 51, die in Richtung der Lampenumhüllung 31 an dem zweiten Ende 22 zur Aussendung einer Ultraschallwelle US entlang der Lampenumhüllung 31 angeordnet ist, wobei die Zylinderachse Z durch die emittierende Fläche 51 des Ultraschallkopfes 5 läuft. Da der Betrieb der Vorrichtung 1 und das Säubern ein fortdauernder Prozess ist, wird dieses durch den von Verfahrensschritt 150 zu Verfahrensschritt 110 rücklaufenden Pfeil dargestellt. Das periodische Säubern 150 kann dabei mindestens ein Mal in 3 Stunden mit einer Ultraschalldauer pro Mal von jeweils mindestens 1 Sekunde erfolgen, vorzugsweise erfolgt dabei das periodische Säubern 150 bei ausgeschalteter UV-Lampe 3. Für das Verfahren 100 kann dabei die Entfernung D zwischen der emittierenden Fläche 51 des Ultraschallkopfes 5 und dem ersten Ende 21 des Behälters 2 darauf angepasst sein 160, dass die vom Ultraschallkopf 5 ausgesendete Ultraschallwelle US eine stehende Welle innerhalb des Behälters 2 bildet. Eine solche Anpassung (gestrichelter Pfeil) kann vor dem eigentlichen Start des Desinfizierens vorgenommen werden und wird in der Regel während des fortdauernden Betriebs nicht mehr geändert.

Die hier gezeigten Ausführungsformen stellen nur Beispiele für die vorliegende Erfindung dar und dürfen daher nicht einschränkend verstanden werden.

### LISTE DER BEZUGSZEICHEN

- 1: erfindungsgemäße Vorrichtung
- 2: zylinderförmiger hohler Behälter
- 2i: Innenseite des Behälters
- 2s1: erster Subbehälter des Behälters
- 2s2: zweiter Subbehälter des Behälters
- 21: erstes Ende (Endbereich) des Behälters
- 22: zweites Ende (Endbereich) des Behälters
- 23: Einlassöffnung des Behälters für die Flüssigkeit
- 24: Auslassöffnung des Behälters für die Flüssigkeit
- 25: Versorgungsaufsatz
- 26: Rezess im zweiten Ende des Behälters
- 27: Randfläche des Rezesses
- 28: Dichtung zwischen erstem und zweitem Subbehälter
- 29: Auslasskanal für Flüssigkeit aus dem Behälter
- 3: UV-Lampe
- 31: flüssigkeitsdichte zylinderförmige Lampenumhüllung der UV-Lampe
- 31k: kuppelförmiger Abschluss der Lampenumhüllung
- 32: erste Halterung zur Befestigung der UV-Lampe separat von der Lampenumhüllung
- 33: zweite Halterung zur Befestigung der Lampenumhüllung separat von der UV-Lampe
- 4: Flüssigkeitsleitblech
- 41: Blechaußenseite des Flüssigkeitsleitblechs (zum Zulaufspalt)
- 42: Blechinnenseite des Flüssigkeitsleitblechs (zur Lampenumhüllung)
- 43: Öffnungen des Flüssigkeitsleitblechs
- 44: (untere) Kante des Flüssigkeitsleitblechs
- 5: Ultraschallkopf
- 51: Ultraschall-emittierende Fläche des Ultraschallkopfes

- 100: Verfahren zum Betreiben der erfindungsgemäßen Vorrichtung
- 110: Einlassen der zu desinfizierenden Flüssigkeit in den Behälter
- 120: Weiterleiten der Flüssigkeit in einem Zulaufspalt mittels eines Flüssigkeitsleitblechs
- 130: Desinfizieren der Flüssigkeit mittels UV-Strahlung der UV-Lampe
- 140: Auslassen der desinfizierten Flüssigkeit durch die Auslassöffnung
- 150: Periodisches Säubern der Lampenumhüllung mittels des Ultraschallkopfes
- 160: Anpassen einer Entfernung zwischen der emittierenden Fläche des Ultraschallkopfes und dem ersten Ende des Behälters zur Bildung einer stehende Ultraschallwelle innerhalb des Behälters

- D: Entfernung zwischen der emittierenden Fläche des Ultraschallkopfes und dem ersten Ende des Behälters
- F: Flüssigkeit
- Q: Querschnittsfläche der Lampenumhüllung senkrecht zur Zylinderachse
- RK: Rücklaufkanal für die Flüssigkeit
- US: Ultraschallwelle
- UV: UV-Strahlung
- Z: Zylinderachse des Behälters
- ZS: Zulaufspalt für die Flüssigkeit

## Patentansprüche

1. Eine Vorrichtung (1) zur Desinfektion von Flüssigkeiten (F) mittels UV-Strahlung (UV) umfassend einen zylinderförmigen hohlen Behälter (2) mit einer Zylinderachse (Z) mit Einlass- und Auslassöffnungen (23, 24) am gleichen ersten abschließenden Ende (21) des Behälters (2) zum Einlassen der zu desinfizierenden Flüssigkeit (F) und zum Auslassen der desinfizierten Flüssigkeit (F), wobei innerhalb des Behälters (2) eine sich entlang der Zylinderachse (Z) in Richtung eines gegenüber dem ersten Ende (21) liegenden zweiten Ende (22) des Behälters (2) erstreckende UV-Lampe (3) in einer flüssigkeitsdichten Lampenumhüllung (31) aus einem zumindest UV-transparenten Material angeordnet ist, und einen Ultraschallkopf (5) mit einer der Lampenumhüllung (31) zugewandten ultraschall-emittierenden Fläche (51) am zweiten Ende (22) zur Aussendung einer Ultraschallwelle (US) entlang der Lampenumhüllung (31), wobei die Zylinderachse (Z), vorzugsweise in einem rechten Winkel, durch die emittierende Fläche (51) des Ultraschallkopfes (5) läuft, **dadurch gekennzeichnet, dass**
die Vorrichtung (1) weiterhin ein in radialer Richtung von der Zylinderachse (Z) zwischen Lampenumhüllung (31) und Behälter (2) angeordnetes zylinderförmiges Flüssigkeitsleitblech (4), dessen zum Behälter (2) gewandte Blechaußenseite (41) einen Zulaufspalt (ZS) von der Einlassöffnung (23) zur Lampenumhüllung (31) und dessen Blechinnenseite (42) einen Rücklaufkanal (RK) der Flüssigkeit (F) entlang der Lampenumhüllung (31) zur Auslassöffnung (22) bildet, umfasst, und dass das Material des Flüssigkeitsleitbleches (4) aus Edelstahl AISI 316L gefertigt ist.

2. Die Vorrichtung (1) nach Anspruch 1,
**dadurch gekennzeichnet,**
**dass** die Lampenumhüllung (31) einen kuppelförmigen Abschluss (31k) in Richtung des Ultraschallkopfes (5) besitzt.

3. Die Vorrichtung (1) nach einem der Ansprüche 1 oder 2,
**dadurch gekennzeichnet,**
**dass** die emittierende Fläche (51) des Ultraschallkopfes (5) so angeordnet ist und eine Größe und Form besitzt, dass eine Projektion der emittierenden Fläche (51) entlang der Zylinderachse (Z) eine Querschnittsfläche (Q) der Lampenumhüllung (31) senkrecht zur Zylinderachse (Z) überdeckt.

4. Die Vorrichtung (1) nach einem der voranstehenden Ansprüche,
**dadurch gekennzeichnet,**
**dass** der Ultraschallkopf (5) ein Piezo-Ultraschallgeber ist.

5. Die Vorrichtung (1) nach einem der voranstehenden Ansprüche,
**dadurch gekennzeichnet,**
**dass** eine Entfernung (D) zwischen der emittierenden Fläche (51) des Ultraschallkopfes (5) und dem ersten Ende (21) des Behälters (2) darauf angepasst ist, dass die vom Ultraschallkopf (5) ausgesendete Ultraschallwelle (US) eine stehende Welle innerhalb des Behälters (2) bildet.

6. Die Vorrichtung (1) nach einem der voranstehenden Ansprüche,
**dadurch gekennzeichnet,**
**dass** sich das Flüssigkeitsleitblech (4) entlang der Zylinderachse (Z) soweit erstreckt, sodass die Lampenumhüllung (31) und zumindest die emittierende Fläche (51) des Ultraschallkopfes (5) innerhalb des Flüssigkeitsleitblechs (4) angeordnet sind.

7. Die Vorrichtung (1) nach einem der voranstehenden Ansprüche,
**dadurch gekennzeichnet,**
**dass** das Flüssigkeitsleitblech (4) zur Dosierung des Flüssigkeitsflusses durch die Vorrichtung (1) mehrere Öffnungen (43) aufweist, um die Flüssigkeit (F) von der Blechaußenseite (41) zur Blechinnenseite (42) zu leiten.

8. Die Vorrichtung (1) nach Anspruch 7,
**dadurch gekennzeichnet,**
**dass** der Behälter an seiner Innenseite (2i) am zweiten Ende (22) einen Rezess (26) aufweist, in dem der Ultraschallkopf (5) angeordnet ist und auf dessen Randfläche (27) das Flüssigkeitsleitblech (4) mit seiner dem zweiten Ende (22) zugewandten Kante (44) aufliegt.

9. Die Vorrichtung (1) nach Anspruch 8,
**dadurch gekennzeichnet,**
**dass** die Kante (44) mehrere Stege zur Auflage auf die Randfläche (27) und dazwischen angeordnete Lücken zur Durchströmung von Flüssigkeit (F) aufweist.

10. Die Vorrichtung (1) nach einem der voranstehenden Ansprüche,
**dadurch gekennzeichnet,**
**dass** der Behälter (2) so ausgestaltet ist, dass die UV-Lampe (3) am ersten Ende (21) des Behälters (2) separat von der Lampenumhüllung (31) mittels einer ersten Halterung (32) mit dem Behälter (2) reversibel verbunden werden kann, wobei das erste Ende (21) so ausgestaltet ist, dass die Flüssigkeit (F) im Rücklaufkanal (RK) unabhängig vom Vorhandensein der UV-Lampe (3) seitlich an der Lampenumhüllung (31) vorbei zur Auslassöffnung (24) gelangen kann.

11. Die Vorrichtung (1) nach einem der voranstehenden Ansprüche,
**dadurch gekennzeichnet,**
**dass** die Lampenumhüllung (31) mittels einer zweiten Halterung (33) reversibel im ersten Ende (21) des Behälters (2) gehalten wird, wobei die zweite Halterung (33) so ausgeführt ist, dass sie sicheren Halt trotz Ultraschallbelastung bietet.

12. Die Vorrichtung (1) nach einem der voranstehenden Ansprüche,
**dadurch gekennzeichnet,**
**dass** der Behälter (2) einen zweiten Subbehälter (2s2), der sich zum zweiten Ende (22) erstreckt, und einen ersten Subbehälter (2s1), der sich zum ersten Ende (21) hin erstreckt, umfasst, wobei der erste und der zweiten Subbehälter (2s1, 2s2) zur Bildung des Behälters (2) geeignet miteinander verbunden sind, vorzugsweise werden die ersten und zweiten Subbehälter (2s1, 2s2) geeignet miteinander verschraubt.

13. Ein Verfahren (100) zum Betreiben einer Vorrichtung (1) nach Anspruch 1, umfassend die Schritte
- Einlassen (110) einer zu desinfizierenden Flüssigkeit (F) durch eine Einlassöffnung (23) in einen zylinderförmigen hohlen Behälter (2) mit einer Zylinderachse (Z), wobei die Einlassöffnung (23) am ersten abschließenden Ende (21) des Behälters (2) angeordnet ist;
- Weiterleiten (120) der Flüssigkeit (F) mittels eines zylinderförmigen Flüssigkeitsleitblechs (4), das in radialer Richtung von der Zylinderachse (Z) zwischen einer flüssigkeitsdichten Lampenumhüllung (31) aus einem UV-transparenten Material, in der eine sich entlang der Zylinderachse (Z) in Richtung eines gegenüber dem ersten Ende (21) liegenden zweiten Ende (22) des Behälters (2) erstreckende UV-Lampe (3) angeordnet ist, und dem Behälter (2) angeordnet ist, wobei eine zum Behälter (2) gewandte Blechaußenseite (41) des Flüssigkeitsleitblechs (4) einen Zulaufspalt (ZS) von der Einlassöffnung (23) zur Lampenumhüllung (31) und eine Blechinnenseite (42) des Flüssigkeitsleitblechs (4) einen Rücklaufkanal (RK) der Flüssigkeit (F) entlang der Lampenumhüllung (31) zu einer Auslassöffnung (24) an dem ersten Ende (21) bildet, und wobei das Flüssigkeitsleitblech (4) aus Edelstahl AISI 316L gefertigt ist;
- Desinfizieren (130) der Flüssigkeit (F) mittels UV-Strahlung (UV) der UV-Lampe (3);
- Auslassen (140) der desinfizierten Flüssigkeit (F) durch die Auslassöffnung (24); und
- Periodisches Säubern (150) der Lampenumhüllung (31) mittels eines Ultraschallkopfes (5) mit einer ultraschall-emittierenden Fläche (51), die in Richtung der Lampenumhüllung (31) an dem zweiten Ende (22) zur Aussendung einer Ultraschallwelle (US) entlang der Lampenumhüllung (31) angeordnet ist, wobei die Zylinderachse (Z) durch die emittierende Fläche (51) des Ultraschallkopfes (5) läuft.

14. Das Verfahren (100) nach Anspruch 13, wobei das periodische Säubern (150) mindestens ein Mal in 3 Stunden mit einer Ultraschalldauer pro Mal von jeweils mindestens 1 Sekunde erfolgt, vorzugsweise erfolgt das periodische Säubern (150) bei ausgeschalteter UV-Lampe (3).

15. Das Verfahren (100) nach einem der Ansprüche 13 oder 14, wobei eine Entfernung (D) zwischen der emittierenden Fläche (51) des Ultraschallkopfes (5) und dem ersten Ende (21) des Behälters (2) darauf angepasst ist (160), dass die vom Ultraschallkopf (5) ausgesendete Ultraschallwelle (US) eine stehende Welle innerhalb des Behälters (2) bildet.

## Claims

1. A device (1) for disinfecting liquids (F) using UV radiation (UV), comprising a cylindrical hollow container (2) having a cylinder axis (Z) with inlet and outlet openings (23, 24) at the same first closing end (21) of the container (2) for letting in the liquid (F) to be disinfected and for letting out the disinfected liquid (F), wherein a UV lamp (3) in a liquid-tight lamp envelop (31) of a at least UV transparent material is arranged within the container (2) and extends along the cylinder axis (Z) towards a second end (22) of the container (2) being opposite to the first end (21), and comprising an ultrasound probe (5) with an ultrasound-emitting surface (51) at the second end (22) facing the lamp envelope (31) for emitting an ultrasonic wave (US) along the lamp envelope (31), wherein the cylinder axis (Z) preferably passes at a right angel through the emitting surface (51) of the ultrasound probe (5),
**characterized in that**
the device (1) further comprises a cylindrical liquid guiding sheet (4) arranged in radial direction from the cylinder axis (Z) between lamp envelope (31) and container (2), the sheet exterior (41) facing the container (2) forming a feed gap (ZS) from the inlet opening (23) to the lamp envelope (31) and the sheet interior (42) forming a return channel (RK) of the liquid (F) along the lamp envelope (31) to the outlet opening (22), and
that the material of the liquid guiding sheet (4) is fabricated of stainless steel AISI 316L.

2. The device (1) according to claim 1,
**characterized in that**
the lamp envelope (31) has a dome-shaped termination (31k) in the direction of the ultrasound probe (5).

3. The device (1) according to one of claims 1 or 2,
**characterized in that**
the emitting surface (51) of the ultrasound probe (5) is arranged such and has such a size and shape that a projection of the emitting surface (51) covers along the cylinder axis (Z) a cross-sectional area (Q) of the lamp envelope (31) perpendicular to the cylinder axis (Z).

4. The device (1) according to one of the preceding claims,
**characterized in that**
the ultrasound probe (5) is a piezo ultrasonic transducer.

5. The device (1) according to one of the preceding claims,
**characterized in that**
a distance (D) between the emitting surface (51) of the ultrasound probe (5) and the first end (21) of the container (2) is adapted such that the ultrasonic wave (US) emitted from the ultrasound probe (5) forms a standing wave within the container (2).

6. The device (1) according to one of the preceding claims,
**characterized in that**
the liquid guiding sheet (4) extends along the cylinder axis (Z) to the extent that the lamp envelope (31) and at least the emitting surface (51) of the ultrasound probe (5) are arranged within the liquid guiding sheet (4).

7. The device (1) according to one of the preceding claims,
**characterized in that**
the liquid guiding sheet (4) comprises several openings (43) for dosage of the liquid flow through the device (1) in order to guide the liquid (F) from the sheet exterior (41) to the sheet interior (42).

8. The device (1) according to claim 7,
**characterized in that**
the container comprises a recess (26) on its inside (2i) at the second (22) in which the ultrasound probe (5) is arranged and on whose edge surface (27) the liquid guiding sheet (4) abuts with its edge (44) facing the second end (22).

9. The device (1) according to claim 8,
**characterized in that**
the edge (44) comprises several bars for support on the edge surface (27) and gaps arranged therebetween for the flow of liquid (F) therethrough.

10. The device (1) according to one of the preceding claims,
**characterized in that**
the container (2) is configured such that the UV lamp (3) is reversibly connectable to the container (2) at the fist end (21) of the container (2) separate from the lamp envelope (31) by a first retainer (32), wherein the first end (21) is configured such that the liquid (F) in the return channel (RK) can pass laterally past the lamp envelope (31) to the outlet opening (24) regardless of the presence of the UV lamp (3).

11. The device (1) according to one of the preceding claims,
**characterized in that**
the lamp envelope (31) is reversibly retained in the first end (21) of the container (2) by the second retainer (33), the second retainer (33) being configured to provide secure retention despite ultrasonic exposure.

12. The device (1) according to one of the preceding claims,
**characterized in that**
the container (2) comprises a second subcontainer (2s2) extending to the second end (22) and a first subcontainer (2s1) extending to the first end (21), wherein the first and the second subcontainer (2s1, 2s2) are suitably connected to each other in order to form the container (2), preferably the first and the second subcontainer (2s1, 2s2) are suitably screwed together.

13. A method (100) for operating a device (1) according to claim 1, comprising the following steps
- letting in (110) a liquid (F) to be disinfected through an inlet opening (23) into a cylindrical hollow container (2) having a cylinder axis (Z), the inlet opening (23) being arranged at the first closing end (21) of the container (2);
- passing (120) the liquid (F) by means of a cylindrical liquid guiding sheet (4) arranged in radial direction from the cylinder axis (Z) between a liquid-tight lamp envelope (31) of a UV transparent material, in which a UV lamp (3) is arranged that extends along the cylinder axis (Z) in the direction of a second end (22) of the container (2) opposite to the first end (21), and the container (2), wherein a sheet exterior (41) of the liquid guiding sheet (4) facing the container (2) comprises a feed gap (ZS) from the inlet opening (23) to the lamp envelope (31) and a sheet interior (42) of the liquid guiding sheet (4) forms return channel (RK) of the liquid (F) along the lamp envelope (31) to an outlet opening (24) at the first end (21), and wherein the liquid guiding sheet (4) is fabricated of stainless steel AISI 316L;
- disinfecting (130) the liquid (F) by UV radiation (UV) of the UV lamp (3);
- letting out (140) the disinfected liquid (F) through the outlet opening (24); and
- periodically cleaning (150) the lamp envelope (31) by an ultrasound probe (5) with an ultrasound-emitting surface (51) being arranged in the direction of the lamp envelope (31) at the second end (22) for emitting an ultrasonic wave (US) along the lamp envelope (31), wherein the cylinder axis (Z) passes through the emitting surface (51) of the ultrasound probe (5).

14. The method (100) according to claim 13, wherein periodically cleaning (150) is performed at least once every 3 hours with an ultrasound duration per time of at least 1 second each, wherein periodically cleaning (150) is preferably performed with the UV lamp (3) being switched off.

15. The method (100) according to one of claims 13 or 14, wherein a distance (D) between the emitting surface (51) of the ultrasound probe (5) and the first end (21) of the container (2) is adapted (160) such that the ultrasonic wave (US) emitted from the ultrasound probe (5) forms a standing wave withing the container (2).

## Revendications

1. Dispositif (1) de désinfection pour liquides (F) au moyen d'un rayonnement UV (UV) comprenant un récipient cylindrique creux (2) ayant un axe de cylindre (Z) avec des ouvertures d'entrée et de sortie (23, 24) à la même première extrémité terminale (21) du récipient (2) pour admettre le liquide à désinfecter (F) et pour évacuer le liquide désinfecté (F), à l'intérieur du récipient (2) une lampe UV (3) s'étendant le long de l'axe du cylindre (Z) dans la direction d'une seconde extrémité (22) du récipient (2) opposée à la première extrémité (21) étant disposée dans une enveloppe de lampe étanche aux liquides (31) constituée d'un matériau au moins transparent aux UV, et une tête à ultrasons (5) ayant une surface émettant des ultrasons (51) tournée vers l'enveloppe de lampe (31) au niveau de la seconde extrémité (22) pour émettre une onde ultrasonore (US) le long de l'enveloppe de lampe (31), l'axe du cylindre (Z), de préférence à angle droit, traversant la surface émettrice (51) de la tête à ultrasons (5), **caractérisé en ce que** le dispositif (1) comprend en outre une plaque cylindrique de guidage de liquide (4) disposée dans la direction radiale à partir de l'axe de cylindre (Z) entre l'enveloppe de lampe (31) et le récipient (2), plaque de guidage de liquide dont le côté extérieur de plaque (41) tourné vers le récipient (2) forme un espace d'entrée (ZS) de l'ouverture d'entrée (23) à l'enveloppe de lampe (31) et dont le côté intérieur de plaque (42) forme un canal de retour (RK) du liquide (F) le long de l'enveloppe de lampe (31) jusqu'à l'ouverture de sortie (22), et **en ce que** le matériau de la plaque de guidage de liquide (4) est constitué d'acier inoxydable AISI 316L.

2. Dispositif (1) selon la revendication 1, **caractérisé en ce que** l'enveloppe de lampe (31) possède une terminaison en forme de dôme (31k) en direction de la tête à ultrasons (5).

3. Dispositif (1) selon l'une des revendications 1 ou 2, **caractérisé en ce que** la surface émettrice (51) de la tête à ultrasons (5) possède une disposition ainsi qu'une taille et une forme telles qu'une projection de la surface émettrice (51) le long de l'axe de cylindre (Z) couvre une section transversale (Q) de l'enveloppe de lampe (31) perpendiculaire à l'axe de cylindre (Z).

4. Dispositif (1) selon l'une des revendications précédentes, **caractérisé en ce que** la tête à ultrasons (5) est un émetteur d'ultrasons piézo.

5. Dispositif (1) selon l'une des revendications précédentes, **caractérisé en ce qu'**une distance (D) entre la surface émettrice (51) de la tête à ultrasons (5) et la première extrémité (21) du récipient (2) est adaptée de sorte que l'onde ultrasonore (US) transmise par la tête à ultrasons (5) forme une onde stationnaire à l'intérieur du récipient (2).

6. Dispositif (1) selon l'une des revendications précédentes, **caractérisé en ce que** la plaque de guidage de liquide (4) s'étend le long de l'axe de cylindre (Z) jusqu'à ce que l'enveloppe de lampe (31) et au moins la surface émettrice (51) de la tête à ultrasons (5) soient disposées à l'intérieur de la plaque de guidage de liquide (4).

7. Dispositif (1) selon l'une des revendications précédentes, **caractérisé en ce que** la plaque de guidage de liquide (4) présente plusieurs ouvertures (43) pour doser le débit de liquide à travers le dispositif (1) pour diriger le liquide (F) du côté extérieur de plaque (41) vers le côté intérieur de plaque (42).

8. Dispositif (1) selon la revendication 7, **caractérisé en ce que** le récipient présente sur son côté intérieur (2i) au niveau de la seconde extrémité (22) un évidement (26) dans lequel la tête à ultrasons (5) est disposée et sur la surface de bord (27) duquel évidement la plaque de guidage de liquide (4) repose avec son bord (44) faisant face à la seconde extrémité (22).

9. Dispositif (1) selon la revendication 8, **caractérisé en ce que** le bord (44) présente plusieurs entretoises destinées à reposer sur la surface de bord (27) et des espaces disposés entre elles pour l'écoulement du liquide (F).

10. Dispositif (1) selon l'une des revendications précédentes, **caractérisé en ce que** le récipient (2) est conçu pour que la lampe UV (3) puisse être reliée de manière réversible au récipient (2) au moyen d'un premier support (32) à la première extrémité (21) du récipient (2) séparément de l'enveloppe de lampe (31), la première extrémité (21) étant conçue pour que le liquide (F) puisse parvenir dans le canal de retour (RK) quelle que soit la présence de la lampe UV (3) latéralement à l'enveloppe de lampe (31) au-delà de l'ouverture de sortie (24).

11. Dispositif (1) selon l'une des revendications précédentes, **caractérisé en ce que** l'enveloppe de lampe (31) est maintenue de manière réversible dans la première extrémité (21) du récipient (2) au moyen d'un second support (33), le second support (33) étant conçu de manière à offrir un maintien sûr malgré l'exposition aux ultrasons.

12. Dispositif (1) selon l'une des revendications précédentes, **caractérisé en ce que** le récipient (2) comprend un second sous-récipient (2s2) qui s'étend jusqu'à la seconde extrémité (22), et un premier sous-récipient (2s1) qui s'étend jusqu'à la première extrémité (21), les premier et second sous-récipients (2s1, 2s2) étant reliés l'un à l'autre de manière appropriée pour former le récipient (2), de préférence les premier et second sous-récipients (2s1, 2s2) étant vissés l'un à l'autre de manière appropriée.

13. Procédé (100) pour faire fonctionner un dispositif (1) selon la revendication 1, comprenant les étapes consistant à
- admettre (110) un liquide (F) à désinfecter à travers une ouverture d'entrée (23) dans un récipient cylindrique creux (2) ayant un axe de cylindre (Z), l'ouverture d'entrée (23) étant disposée à la première extrémité de terminaison (21) du récipient (2) ;
- transférer (120) le liquide (F) au moyen d'une plaque cylindrique de guidage de liquide (4) qui est disposée dans la direction radiale à partir de l'axe du cylindre (Z) entre une enveloppe de lampe étanche aux liquides (31) constituée d'un matériau transparent aux UV, enveloppe dans laquelle est disposée une lampe à UV (3) s'étendant le long de l'axe de cylindre (Z) en direction d'une seconde extrémité (22) du récipient (2) opposée à la première extrémité (21), et le récipient, un côté extérieur de plaque (41) de la plaque de guidage de liquide (4) tourné vers le récipient (2) formant un espace d'entrée (ZS) de l'ouverture d'entrée (23) à l'enveloppe de lampe (31) et un côté intérieur de plaque (42) de la plaque de guidage de liquide (4) formant un canal de retour (RK) du liquide (F) le long de l'enveloppe de lampe (31) jusqu'à une ouverture de sortie (24) au niveau de la première extrémité (21), et la plaque de guidage de liquide (4) étant constituée d'acier inoxydable AISI 316L ;
- désinfecter (130) le liquide (F) au moyen d'un rayonnement UV (UV) de la lampe UV (3) ;
- évacuer (140) le liquide désinfecté (F) par l'ouverture de sortie (24) ; et
- nettoyer périodiquement (150) l'enveloppe de lampe (31) au moyen d'une tête à ultrasons (5) avec une surface émettrice d'ultrasons (51) qui est disposée en direction de l'enveloppe de lampe (31) au niveau de la seconde extrémité (22) pour l'émission d'une onde ultrasonore (US) le long de l'enveloppe de lampe (31) dans lequel l'axe de cylindre (Z) traverse la surface émettrice (51) de la tête à ultrasons (5).

14. Procédé (100) selon la revendication 13, dans lequel le nettoyage périodique (150) a lieu au moins une fois toutes les 3 heures avec une durée ultrasonore d'au moins 1 seconde à chaque fois, de préférence le nettoyage périodique (150) a lieu avec le Lampe UV éteinte (3).

15. Procédé (100) selon l'une des revendications 13 ou 14, dans lequel une distance (D) entre la surface émettrice (51) de la tête à ultrasons (5) et la première extrémité (21) du récipient (2) est adaptée de sorte que l'onde ultrasonore (US) transmise par la tête à ultrasons (5) forme une onde stationnaire à l'intérieur du récipient (2).
